# EUROPÄISCHE PATENTSCHRIFT

(11) **EP 0 381 848 B1**
(45) Veröffentlichungstag und Bekanntmachung des Hinweises auf die Patenterteilung: **13.08.1997**
(21) Anmeldenummer: 89123630.9
(22) Anmeldetag: 21.12.1989
(51) Int. Cl.: G01N 27/90

(54) **Vorrichtung für die zerstörungsfreie Werkstoffprüfung**
Apparatus for non destructive examination of materials
Appareil pour l'examen non destructif de matériaux

(30) Priorität: 08.02.1989 CH 422/89
(43) Veröffentlichungstag der Anmeldung: 16.08.1990
(73) Patentinhaber: Asea Brown Boveri AG, 5401 Baden (CH)
(72) Erfinder: Schmidt, Robert, D-7890 Waldshut-Tiengen 2 (DE); Scholz, Arthur, CH-5430 Wettingen (CH)

(56) Entgegenhaltungen:
- EP-A- 0 117 790
- EP-A- 0 147 630
- EP-A- 0 228 177
- WO-A-86/01602

## Beschreibung

Die Erfindung betrifft eine Vorrichtung für die zerstörungsfreie Werkstoffprüfung an Bauteiloberflächen gemäss Oberbegriff des Anspruchs 1. Sie betrifft auch ein Verfahren zum Betrieb dieser Vorrichtung.

### STAND DER TECHNIK

Bei der Wirbelstromprüfung werden sogenannte Tastsonden in Bleistiftform oder Abwandlungen derselben zum Nachweis von Oberflächenrissen oder Werkstoffeigenschaften in Maschinenbauteilen sowie zur Bestimmung von Schichtdicken auf Metalloberflächen verwendet. Diese Tastsonden bestehen aus einer oder zwei getrennten Spulen, wobei Teile dieser Spulen zusätzlich einen gegenläufigen Wicklungssinn aufweisen können. Je nach Schaltungsart unterscheidet man zwischen Absolut- und Differenz- bzw. Mehrfachdifferenz-Systemen. Für anspruchsvollere Anwendungen werden sie an Geräte angeschlossen, die nach dem Prinzip einer Brückenschaltung funktionieren oder eine sogenannte transformatorische Schaltung aufweisen. Letztere wird auch Sender/Empfänger-Technik genannt. Um das Abtasten gekrümmter Prüfstückoberflächen zu erleichtern, sind in neuerer Zeit Verbesserungen vorgeschlagen worden, die darauf beruhen, dass man mehrere Sonden durch mechanische Führungen mit gewissen Freiheitsgraden der Bewegung miteinander koppelt oder auf Bändern oder Folien fixiert bzw. auf fotochemischem Weg herstellt. Diese fotochemisch hergestellten Folien lassen sich jedoch nur an Krümmungsflächen von Zylindern und Kegeln anpassen. Es gehört ferner zum Stand der Technik, mit sogenannten Multiplexer-Schaltungen mehrere Messkanäle der Reihe nach mit einem Prüfgerät zu verbinden. In der Wirbelstromprüftechnik haben solche Messsysteme, wegen des damit verbundenen Aufwands, eine Sondenzahl in der Grössenordnung von max. 20 noch nicht überschritten. In der Druckschrift EP O 228177 wurde als Weiterbildung eine Anordnung mit bis zu 50 Spulen vorgeschlagen. Sie liefert aber, wie gezeigt werden kann, wegen paralleler Strompfade über die Nachbarspulen, nicht die angestrebte getrennte Ansteuerung der einzelnen Spulen. Schliesslich gehört es noch zum Stand der Technik, in Gleichstromkreisen matrixartige Anordnungen von Schaltungselementen durch Diodenbeschaltung zu entkoppeln.

Allgemein lässt sich sagen, dass die Wirbelstromprüfung mit Tastsonden durch Störsignale behindert wird, die von Abhebe- und Kippbewegungen der Sonde selbst sowie von Bauteilkanten in Sondennähe herrühren. Abhilfe hiergegen wird durch folgende Massnahmen angestrebt:
- Mechanische Führungshilfen;
- Elektronische Trennung von Stör- und Nutzsignal, soweit als möglich;
- Bauweise der Sonden in sogenannter Differenz- und Mehrfachdifferenzschaltung;
- Elektronische Signalbeeinflussung (Mischen, Zusatzspannung);
- Ausnützung der Signaldynamik beim Ueberfahren eines Risses.

Die Wirksamkeit dieser Massnahmen ist indessen beschränkt und in vielen Fällen für eine gesicherte Prüfaussage unzureichend, so bei schlechter Zugänglichkeit der Prüfstelle oder bei rauher Oberfläche des zu prüfenden Stückes. Letztere Unzulänglichkeit ist bei Gasturbinenschaufeln nach dem Betrieb regelmässig der Fall. Bezüglich der daraus entstehenden Störeffekte ist zu sagen, dass eine sichere Signalinterpretation grosse Fachkenntnisse und Erfahrung verlangt. Liegen diese Voraussetzungen nicht vor, so ist eine wirtschaftlich interessante Einsatzmöglichkeit dieses Prüfverfahrens nicht gegeben. Dies stört insbesondere dann, wenn auch die üblichen Oberflächenprüfmethoden in ihrer Anwendung wesentlich eingeschränkt sind, beispielsweise wenn die Zugänglichkeit und/oder Sauberkeitsanforderungen gegenüber der Prüfmethode den Einsatz des Magnetpulververfahrens verhindern, oder wenn bei der Eindringprüfung die Minimalanforderungen gegenüber dem Oberflächenzustand des zu prüfenden Stückes nicht erfüllt sind.

### AUFGABE DER ERFINDUNG

Hier will die Erfindung Abhilfe schaffen. Der Erfindung, wie sie in den Ansprüchen gekennzeichnet ist, liegt die Aufgabe zugrunde, bei einer Vorrichtung und einem Verfahren der eingangs genannten Art eine höhere Aussagekraft über die Beschaffenheit des zu prüfenden Oberflächenbereichs zu erreichen.

Der wesentliche Vorteil der Erfindung ist darin zu sehen, dass die Behinderung der Signalinterpretation, insbesondere durch die vorne beschriebenen geometrischen Störeffekte, beseitigt werden und/oder durch eine geeignete Signalverarbeitung zu einem flächenbezogenen pseudodreidimensionalen Bild als Störsignale leichter erkannt und somit von den gesuchten Nutzsignalen unterschieden werden können.

Dies ist insofern möglich, als die mattenartige Anordnung von Sonden (Sondenmatte) durch eine speziell auf die Sondenmatte abgestimmte Taktschaltung nacheinander mit einem herkömmlichen Wirbelstromgerät verbunden werden, indem die Prüfsignale der Einzelsonden voneinander entkoppelt und zeilen- bzw. spaltenweise sequentiell in einen Rechner eingegeben und in der genannten Form am Bildschirm dargestellt werden.

Der genannte generelle Vorteil der Verbesserung des Nutz-/Störverhältnisses wird durch einen wesentlichen Vorteil der Erfindung ermöglicht, die darin besteht, dass sich die Sondenmatte zwar an gewölbte Prüfstückoberflächen anpassen kann, ihre Einzelelemente aber wegen ihrer Biegungs- und Dehnungssteifigkeit, trotz örtlicher Unebenheit, in einer zueinander definierten Lage z.B. in einer harmonischen Sattelfläche hält. Störsignale durch örtliche Schwankungen der Sondenlage sind damit nicht mehr möglich. Störsignale grossflächiger Einflüsse sind gegenüber den Signalen lokaler Fehler wesentlich leichter unterscheidbar.

Um den eben genannten Vorteil zu realisieren, kann es auch sinnvoll sein, die genannte mechanische Funktion der Sondenmatte gänzlich von der elektrischen zu trennen, indem eine Folie geeigneter Flexibilität über einen Prüfgegenstand gespannt wird und als Gleitfläche für eine darauf formschlüssig bewegbare Prüfsonde dient, die vorzugsweise flach und somit selbstzentrierend ausgeführt ist.

Ein weiterer Vorteil der Erfindung ist in den vorgesehenen elektrischen Schaltungsarten der Sondenmatte zu sehen. Die zeilen- und spaltenweise Ansteuerung erlaubt im Gegensatz zu bisherigen Vorschlägen eine wirksame Entkopplung der einzelnen Sondenelemente bei der geringstmöglichen Anzahl von Anschlussverbindungen.

Aus dieser Beschaffenheit heraus ergeben sich folgende weitere Vorteile der Erfindung:
- Die Koordinaten des Prüfortes sind nun unter Verwendung der Taktschaltung ohne störenden Weggeber genau lokalisierbar. Dies ist die Basis, um unter Anwendung eines Rechners eine pseudodreidimensionale Darstellung der Signalortskurven am Bildschirm zu erzeugen, welche wegen ihrer flächendeckenden Information wesentlich leichter und sicherer interpretierbar ist.
- Bei komplizierten Bauteilkonturen besteht ferner die Möglichkeit, aus der Form der Signalortskurven auf die Einhaltung einer sauberen Positionierung der Sondenmatte zu schliessen. Dieser Vorteil macht sich insbesondere dort bemerkbar, wo Prüfungen an schwer zugänglichen Bauteilflächen ohne Sichtkontakt vorgenommen werden müssen.
- Wesentliche Kosteneinsparungen ergeben sich aus der Möglichkeit heraus, durch nun höhere Prüfgeschwindigkeit fabrikationsbegleitende Prüfungen vorzunehmen; sodann auch, dass diese Prüfungen durch den Einsatz weniger qualifizierten Personals durchgeführt werden können; ferner, dass diese Prüfungen ohne Demontage eines zu prüfenden Bauteils vorgenommen werden können, insbesondere beispielsweise bei Service-Inspektionen an schwer zugänglichen Bauteilen bei Gas- und Dampfturbinen.

Vorteilhafte und zweckmässige Weiterbildungen der erfindungsgemässen Aufgabenlösung sind in den abhängigen Patentansprüchen gekennzeichnet.

Im folgenden werden anhand der Zeichnung Ausführungsbeispiele und mehrere, jedoch ebenfalls nicht abschliessende Anwendungsmöglichkeiten der Erfindung erläutert. Alle für das unmittelbare Verständnis der Erfindung nicht erforderlichen Elemente sind fortgelassen. In den verschiedenen Figuren sind jeweils gleiche Elemente mit den gleichen Bezugszeichen versehen. In den Blockschaltbildern deuten Pfeile den Informationsfluss an und sind nicht identisch mit einer bestimmten Stromrichtung.

### KURZE BESCHREIBUNG DER ZEICHNUNG

Es zeigt:
- Fig. 1: ein Blockschaltbild zur Prüfanordnung,
- Fig. 2: eine Skizze zum mechanischen Aufbau einer Sondenmatte,
- Fig. 3-7: mögliche Schaltungsarten zur Entkopplung der einzelnen Sondenelemente und
- Fig. 8-11: mögliche Anwendungsarten der Sondenmatte.

### BESCHREIBUNG DER AUSFÜHRUNGSBEISPIELE UND ANWENDUNGSMÖGLICHKEITEN

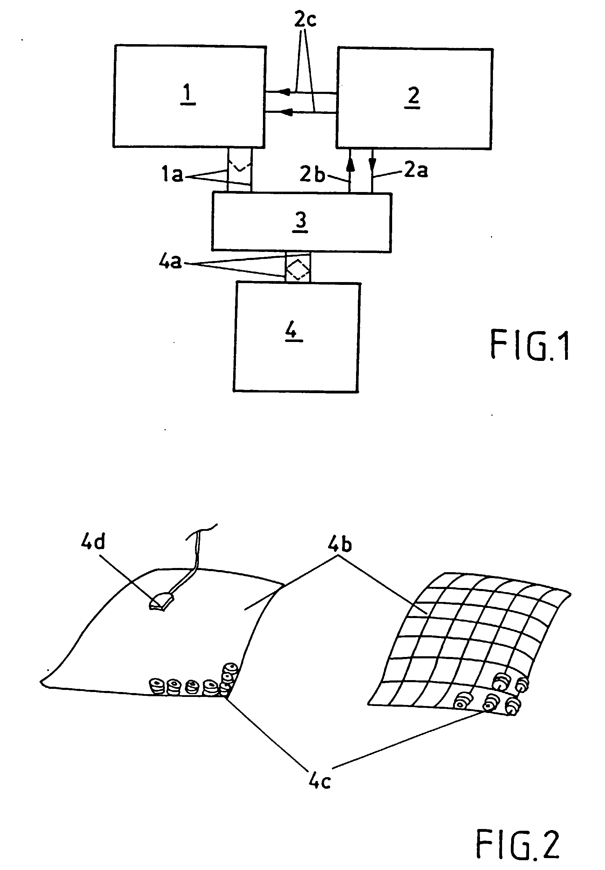

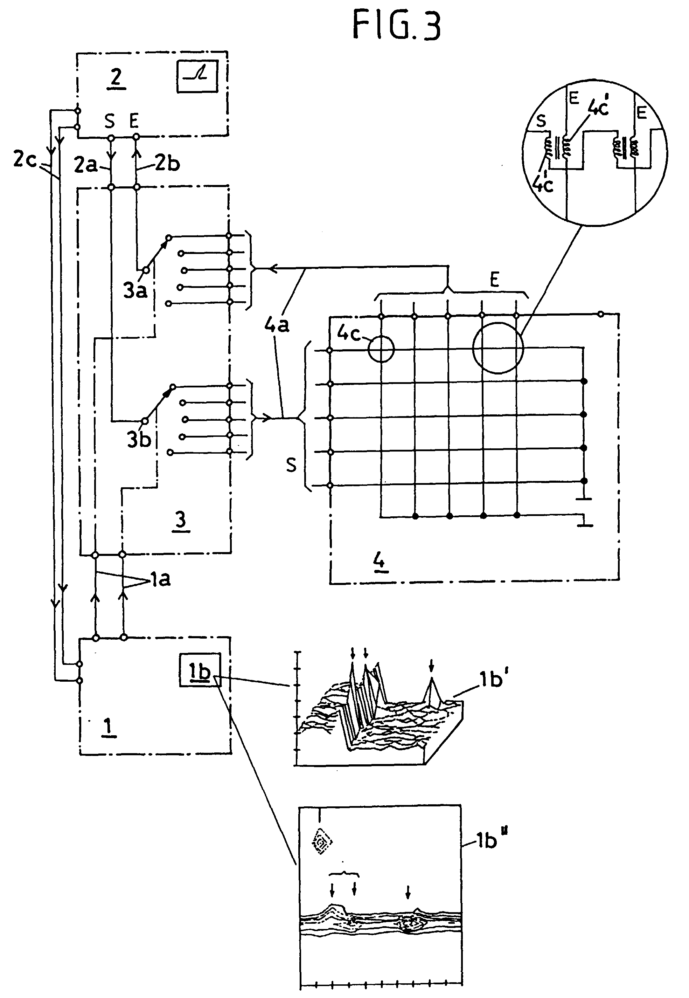

Zum besseren Verständnis sind zunächst Fig. 1 und 3 gleichzeitig heranzuziehen. Wie aus Fig. 1 hervorgeht, besteht die Schaltung aus einem Rechner 1, einem Wirbelstromgerät 2, einem Multiplexer 3 und einer Sondenmatte 4. Der Rechner steuert über die Steuerleitungen 1a die Taktschaltung (Multiplexer) 3 und verarbeitet die bei jedem Messtakt am Ausgang des Wirbelstromgerätes 2 über die Signalleitung 2c anstehenden Prüfsignale zu einer flächendeckenden Signaldarstellung am Bildschirm 1b. Beim Wirbelstromgerät 2 handelt es sich um eine konventionelle Ausrüstung, bei deren Einsatz im Prüfstück Wirbelströme erzeugt werden, deren induktive Rückwirkung auf eine Messspule oder ein andersartiges Messelement als Prüfinformation verarbeitet wird. Aufgrund von Aenderungen der elektrischen Leitfähigkeit und der magnetischen Permeabilität werden Aenderungen der Legierungsart, der Härte und lokale Fehlstellen, wie Lunker oder Risse im Oberflächenbereich des Prüfstückes nachgewiesen. Wie aus Fig. 2 hervorgeht, wird das Prüfstück nicht mit einer Tastsonde abgetastet, sondern zu dessen Prüfung eine Sondenmatte 4 eingesetzt, welche aus einer dünnen folienartigen Tragstruktur 4b besteht, die entweder mit einer Vielzahl von Einzelsonden 4c fest bestückt oder mit einer formschlüssig darauf bewegbaren Einzelsonde 4d versehen ist. Die Tragstruktur 4b hat bei der flächendeckenden Prüfung an Bauteiloberflächen die Aufgabe, sich dessen Oberfläche möglichst weitgehend anzupassen, gleichzeitig aber die Beweglichkeit der einzelnen Sondenelemente 4c gegeneinander derart einzuschränken, dass sie in einer gemeinsamen Sattelfläche verbleiben, um auf diese Weise örtliche Unebenheiten der Prüfstückoberfläche auszugleichen.

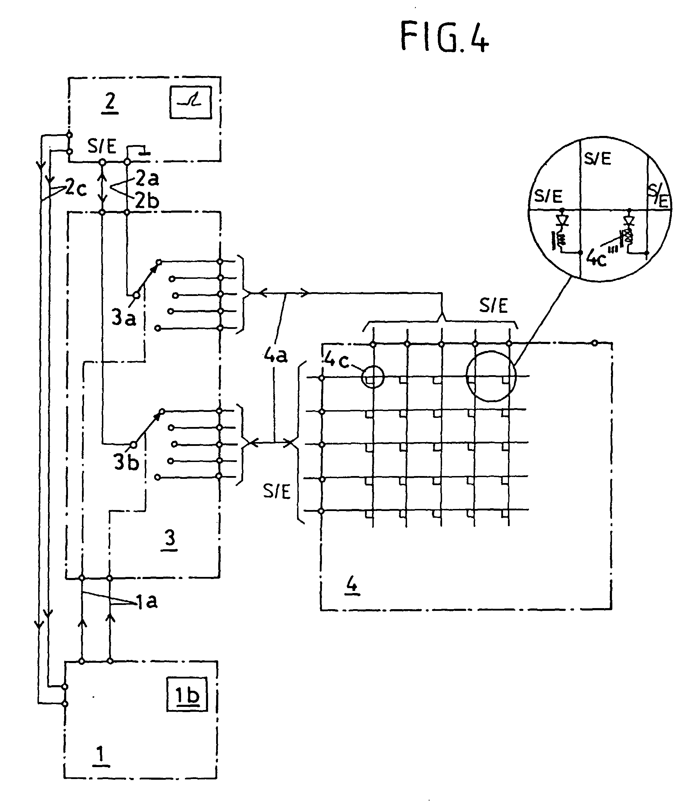

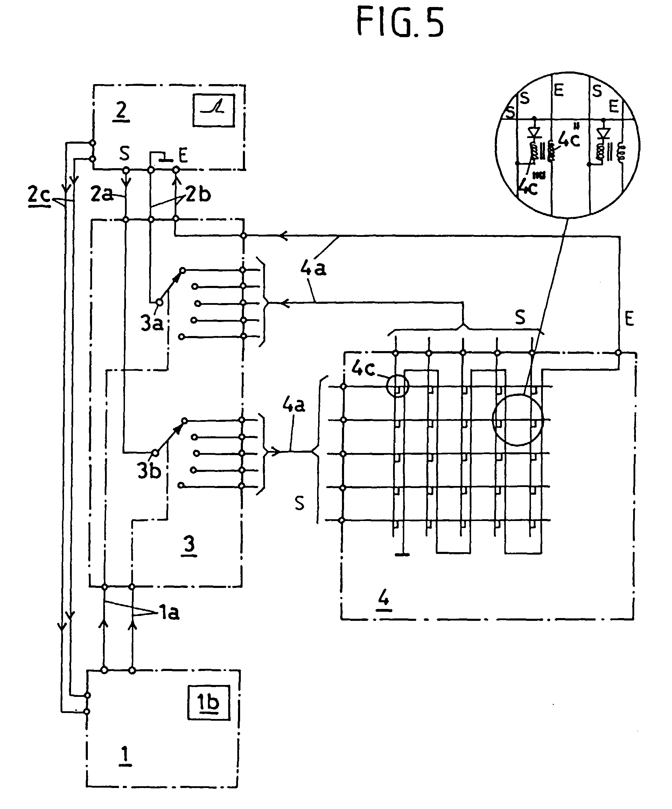

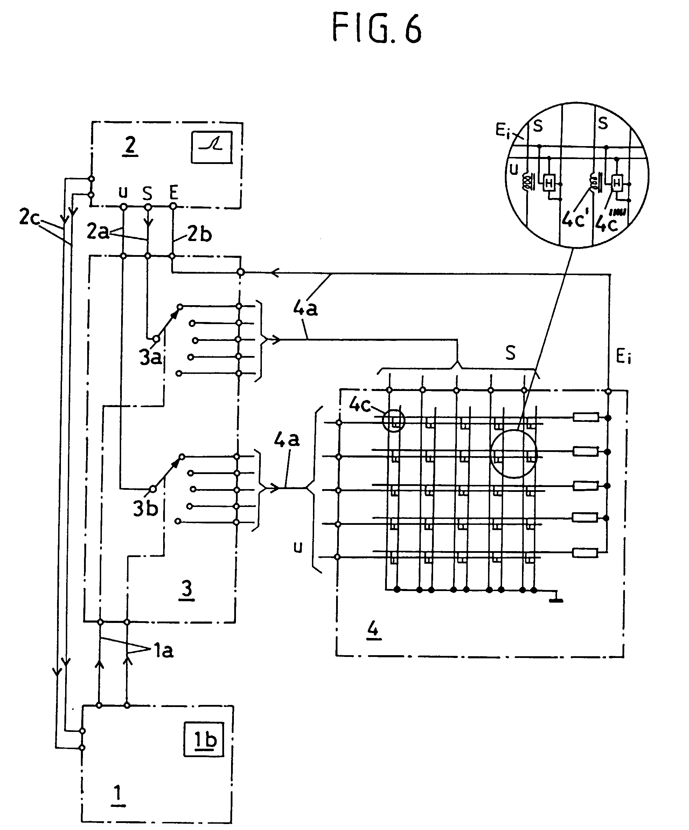

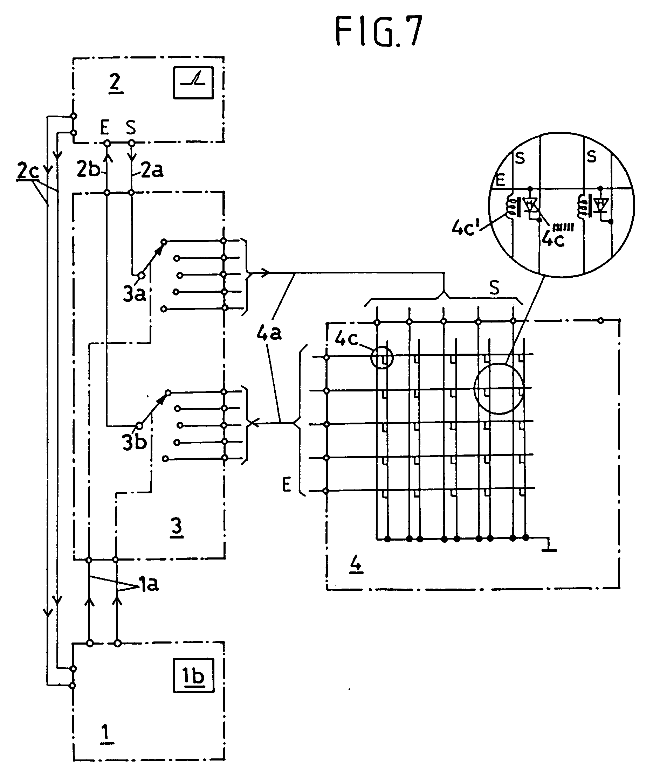

Die Sondenelemente 4c oder die Einzelsonde 4d können dem Stand der Technik entsprechend aus einer Senderspule 4c' und einer Empfängerspule 4c" bestehen (s. Fig. 3), oder durch eine diodenbeschaltete Spule mit gemeinsamer Sender-Empfängerfunktion 4c‴ (s. Fig. 4), eine diodenbeschaltete Senderspule 4c"" mit einer Empfängerspule 4c" (s. Fig.5), sowie eine Senderspule 4c' und eine Hallsonde 4c"‴ (s. Fig. 6) bzw. eine Senderspule 4c' und eine Magnetdiode 4c'''''' (s. Fig. 7) gebildet werden. Die Spulen können auch mit feldbeeinflussenden Elementen, wie Ferritkernen oder elektrisch leitenden Abschirmungen versehen sein. Die Einsetzbarkeit der Sondenmatte 4 erfolgt vorzugsweise in der Art, dass ein formschlüssiges Anlegen an das Prüfstück durch hydraulische, pneumatische oder anderweitig elastische Kissen, ggf. unter Verwendung vorgeformter Stützstrukturen erreicht wird, soweit dies die gezielte Biege- und Dehnungselastizität der Matte zulässt.

Durch die mechanische Verbindung der Sondenelemente untereinander werden Störsignale durch örtliche Schwankungen der Sondenlage unterdrückt und Störsignale grossflächiger Einflüsse sind gegenüber den Signalen lokaler Fehler wesentlich leichter unterscheidbar, soweit deren Ausdehnung mehr als drei Elementabstände beträgt. Um die bei grösseren Sondenmatten untragbar hohe Anzahl von elektrischen Anschlüssen zu reduzieren, werden die Sondenelemente jeweils zeilen- bzw. spaltenweise gemeinsam angeschlossen. Um sie funktionsmässig voneinander zu trennen, ist dabei eine ausreichende Entkopplung notwendig. Sie kann in Kombination mit dem Multiplexer 3 durch geeignete Anschlussarten der entsprechend ausgebildeten Sondenmatte 4 an das Wirbelstromgerät 2 erreicht werden. Die Fig. 3 - 7 zeigen beispielhaft einige Schaltungsarten.

In Fig. 3 wird das hochfrequente Erregersignal über den Ausgang 2a des Wirbelstromgerätes 2 vom Multiplexer 3b getaktet an die zeilenweise hintereinander geschalteten Sendespulen 4c' übertragen. Gleichzeitig wird jeweils eine Spalte mit hintereinander geschalteten Empfängerspulen über den Multiplexer 3a mit dem Signaleingang des Wirbelstromgerätes 2 verbunden. Dadurch wird nur am Kreuzungspunkt der aktivierten Zeile und Spalte die Rückantwort des Prüfstücks auf das Erregersignal als Prüfinformation weiterverarbeitet. Das am Ausgang des Wirbelstromgerätes anstehende demodulierte Prüfsignal wird über die Leitung 2c in den Rechner 1 eingelesen. Da der Rechner aus der Stellung der Taktschaltung den zugehörigen Prüfort entnehmen kann, ist es möglich, über ein Rechenprogramm die Verteilung der Prüfsignale über den von der Sondenmatte 4 überdeckten Prüfbereich zu einem flächendeckenden pseudodreidimensionalen Signalbild 1b' oder zu einer zweidimensionalen Höhenliniendarstellung 1b" aufzubereiten, wie es einer bewerteten C-Bild-Darstellung bei der Ultraschallprüfung entspricht und in Fig. 3 angedeutet wird. Dies vereinfacht die Interpretation der Wirbelstromsignale wesentlich, bei gleichzeitiger Erhöhung der Aussagesicherheit. Ferner wird dadurch eine Prüfung ohne Sichtkontakt zur Prüfsonde z.B. an schlecht zugänglichen Bauteiloberflächen möglich.

In Fig. 4 wird das hochfrequente Erregersignal über den Ausgang 2a+b vom Multiplexer 3b getaktet an den Zeilenanschluss mit dem Element 4c übertragen. Gleichzeitig legt der Multiplexer 3a einen der Spaltenanschlüsse auf Masse. Im Kreuzungspunkt verbindet ein gleichzeitig als Sender- und Empfängerspule wirkendes Sondenelement 4c‴ elektrisch die beiden aktivierten Zeilen- bzw. Spaltenanschlüsse. Eine Diode verhindert, dass der Erregerstrom auch über benachbarte Sondenelemente fliessen kann. Die Rückantwort des Prüfstücks verändert über eine Impedanzänderung den Spulenstrom und wird damit als Prüfinformation auf dem gleichen Weg über den Multiplexer 3b und die Signalleitung 2a+b in das Wirbelstromgerät 2 übertragen. Der weitere Ablauf entspricht grundsätzlich dem bei Fig. 3 beschriebenen, wobei die Signalverarbeitung im Wirbelstromgerät selbst von dessen Bauweise abhängt.

In Fig. 5 werden die Prinzipien der Schaltungsarten nach Fig. 3 und 4 miteinander kombiniert. Die Sondenelemente bestehen dabei aus je einer Senderspule 4c"" mit Entkopplungsdiode und einer Empfängerspule 4c", wobei die Senderspule jeweils in den Kreuzungspunkten den Zeilenanschluss mit einem Spaltenanschluss verbindet. Das Erregersignal wird dabei über die Leitung 2a und den Multiplexer 3b an den Zeilenanschluss übertragen, während der zugehörige Spaltenanschluss über den Multiplexer 3a an Masse gelegt wird. Die Rückantwort des Prüfstücks am aktivierten Kreuzungspunkt wird dann von der Empfängerspule 4c" über die Leitung 2b zum Wirbelstromgerät zurückgeführt. Die Empfängerspulen können in Serie geschaltet sein oder zusätzlich spaltenweise durch einen nicht dargestellten dritten Multiplexer getaktet werden. Die weitere Signalverarbeitung entspricht Fig. 3.

Auf die Fig. 3 - 5 bezogen, bewirkt die Matrix für eine Schaltungsart mit zeilen- und spaltenweiser Ansteuerung eine wirksame Entkopplung, d.h. eine selektive Ansteuerung von Einzelsonden bei einem Minimum an Zuleitungen und Anschlüssen.

In Fig. 6 wird anstelle der Empfängerspulen eine Matrix von Hallsonden 4c"‴ verwendet, deren Spannungsversorgung über eine der Leitungen 2a, den Multiplexer 3b und den zugehörigen Zeilenanschluss erfolgt. Gleichzeitig werden die spaltenweise in Serie geschalteten Sendespulen 4c' über den Multiplexer 3a getaktet mit dem hochfrequenten Erregersignal versorgt. Auf diese Weise erfolgt die Entkopplung der einzelnen Mattenelemente. Die Rückantwort des Prüfstücks wird über die ebenfalls zeilenweise parallel geschalteten Signalanschlüsse der Hallsonden 4c"''' über die Leitung 2b zum Prüfgerät 2 zurückgeführt. Dort werden sie in ähnlicher Weise wie vorher beschrieben weiterverarbeitet.

In Fig. 7 wird anstelle der Empfängerspulen eine Matrixanordnung von Magnetdioden 4c""" verwendet. Wie in Fig. 6 werden die spaltenweise angeschlossenen Senderspulen über die Signalleitung 2a und den Multiplexer 3a getaktet mit dem Hochfrequenzsignal versorgt. Die Entkopplung der Elemente erfolgt zeilenweise über die mit dem Multiplexer 3b getaktete Abfragung und Rückführung über die Leitung 2b zum Prüfgerät 2. Die weitere Verarbeitung erfolgt wieder analog wie vorher beschrieben.

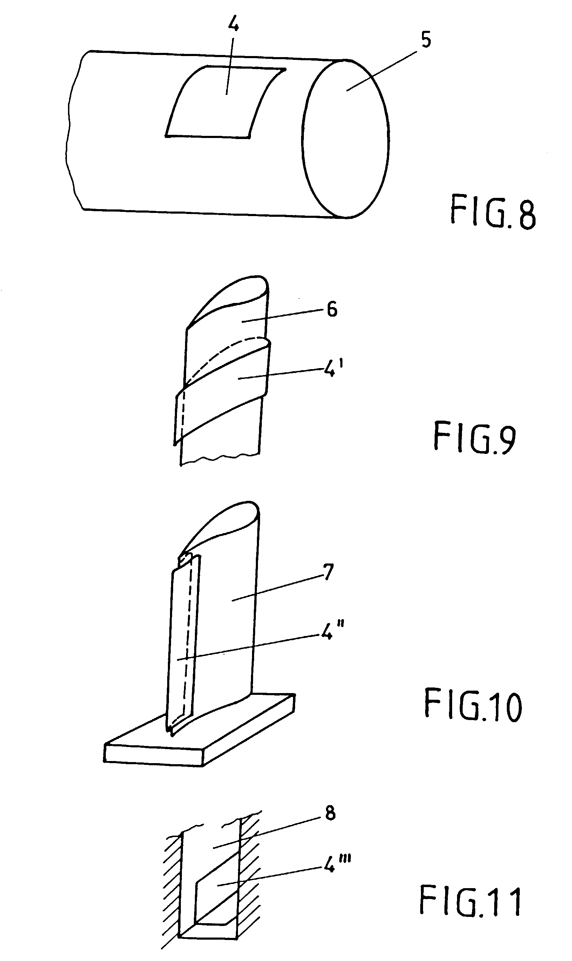

Die Fig. 8 - 11 zeigen einige Anwendungsmöglichkeiten der Sondenmatte 4. Bei den hier als Beispiel wiedergegebenen Bauteilen 5 bis 8 ist eine rationelle und aussagefähige Wirbelstromprüfung unter Verwendung herkömmlicher Tastsonden, wegen der Kontur und/oder betriebsbedingter Beschädigungen der zu prüfenden Oberflächenbereiche, sowie wegen beschränkter Zugänglichkeit oder wegen des nötigen Aufwands kaum erreichbar oder ganz unmöglich.

Demgegenüber zeit Figur 8 recht deutlich, wie die Sondenmatte 4 durch einfachste Handhabung auf der Welle 5 für die Wirbelstromprüfung von beispielsweise einer hier nicht gezeigten Wellenschweissnaht plaziert werden kann. Die hier beispielhaft in quadratischer Form ausgeführte Sondenmatte 4 kann in analoger Weise auch zur Prüfung der Innenoberfläche einer nicht gezeigten Axialbohrung mit einer beispielsweise dort durchgehenden Schweissnaht eingesetzt werden. Noch ausgeprägter in der Anwendung zeigen sich die Vorteile der Sondenmatte bei der Prüfung eines Schaufelblattes 6, wie es aus Fig. 9 hervorgeht. Die hier zum Einsatz kommende Sondenmatte 4' ermöglicht mit ihrer Flexibilität die Erfassung der unterschiedlich gewölbten Schaufelseiten in einem gemeinsamen Prüfdurchgang. Betriebsbedingte Beschädigungen, insbesondere der Ein- und Austrittskanten der Schaufel, die bisher die Bewegung einer herkömmlichen Tastsonde und damit die Signalauswertung gravierend behindert haben, spielen beim Einsatz der Sondenmatte nur noch eine untergeordnete Rolle. Dies zeigt Fig. 10 mit einer speziell für die Prüfung einer Schaufelkante ausgelegten Sondenmatte 4".

Fig. 11 zeigt wie auch Nutpartien, die bisher für herkömmliche Tastsonden meist unzugänglich waren, mit flexiblen oder speziell vorgeformten Sondenmatten 4‴ rationell und sicher geprüft werden können.

## Patentansprüche

1. Vorrichtung für die zerstörungsfreie Werkstoffprüfung an Bauteiloberflächen mittels eines Wirbelstromgerätes mit einer Sondenmatte, welche aus einer Tragstruktur und einem Wirbelstromsondensystem besteht, dadurch gekennzeichnet,
dass die Tragstruktur der Sondenmatte (4,4',4",4''') dehnungselastisch ist,
dass das Mass der Dehnungselastizität dieser Tragstruktur der Sondenmatte so geartet ist, dass damit Sattelflächen bildbar sind, und
dass die sich aus der gebildeten Sattelfläche ergebende Ausrichtung des Wirbelstromsondensystems bei Messung an mehreren Orten der Tragstruktur zu einer Unterdrückung von Störsignalen führt.

2. Vorrichtung nach Anspruch 1, dadurch gekennzeichnet, dass das Wirbelstromsondensystem aus einer beweglichen Wirbelstromsonde (4d) besteht, welche mit der gebildeten Sattelfläche formschlüssig in Wirkverbindung steht.

3. Vorrichtung nach Anspruch 1, dadurch gekennzeichnet, dass das Wirbelstromsondensystem aus einer Matrixanordnung (4c) besteht.

4. Vorrichtung nach Anspruch 3, dadurch gekennzeichnet, dass die Matrixanordnung eine Schaltungsart mit zeilen-bzw. spaltenweiser Ansteuerung aufweist.

5. Vorrichtung nach Anspruch 4, dadurch gekennzeichnet, dass die Elemente der Matrixanordnung schaltungstechnisch durch eine Kombination von Senderspulen (4c') mit Empfängerspulen (4c"), oder von diodenbeschalteten Spulen (4c'''), oder von Empfängerspulen (4c") mit diodenbeschalteten Senderspulen (4c''''), oder von Senderspulen (4c') mit Hall-Sonden (4c'''''), oder von Senderspulen (4c') mit Magnetdioden (4c'''''') entkoppelbar sind.

## Claims

1. Apparatus for non-destructive material testing at component surfaces by means of an eddy-current set with a probe mat which consists of a support structure and an eddy-current probe system, characterized in that
the support structure of the probe mat (4, 4', 4", 4''') is elastic under strain,
in that the magnitude of strain elasticity of this support structure of the probe mat is configured such that saddle surfaces can be formed therewith, and in that the alignment, resulting from the saddle surface formed, of the eddy-current probe system leads, on measurement at a number of locations on the suport structure, to suppression of spurious signals.

2. Apparatus according to Claim 1, characterized in that the eddy-current probe system consists of a movable eddy-current probe (4d) which is operationally connected in a self-closed fashion to the saddle surface formed.

3. Apparatus according to Claim 1, characterized in that the eddy-current probe system consists of a matrix arrangement (4c).

4. Apparatus according to Claim 3, characterized in that the matrix arrangement has a type of circuit driven by row and column respectively.

5. Apparatus according to Claim 4, characterized in that in terms of circuit engineering the elements of the matrix arrangement can be decoupled by a combination of transmitter coils (4c') with receiver coils (4c"), or of diode-connected coils (4c'''), or of receiver coils (4c") with diode-connected transmitter coils (4c''''), or of transmitter coils (4c') with Hall probes (4c'''''), or of transmitter coils (4c') with modistors (4c'''''').

## Revendications

1. Appareil pour l'examen non destructif des matériaux sur la surface des composants à l'aide d'un générateur de courant de Foucault avec un tapis de sondes, lequel se compose d'une structure porteuse et d'un système de sondes de courant de Foucault, caractérisé par le fait que la structure porteuse du tapis de sonde (4, 4', 4', 4''') présente une élasticité à l'élongation, que la côte d'élasticité à l'élongation de cette structure porteuse du tapis de sondes est telle qu'il est possible de former avec elle des surfaces en sellette, et que l'orientation du système de sondes de courant de Foucault résultant de la surface en sellette formée provoque un affaiblissement des signaux parasites lors d'une mesure en plusieurs points de la structure porteuse.

2. Appareil selon la revendication 1, caractérisé par le fait que le système de sondes de courant de Foucault se compose d'une sonde de courant de Foucault mobile (4d), laquelle se trouve en liaison opérationnelle avec et en suivant la forme de la surface en sellette formée.

3. Appareil selon la revendication 1, caractérisé par le fait que le système de sondes de courant de Foucault se compose d'une disposition matricielle (4c).

4. Appareil selon la revendication 3, caractérisé par le fait que la disposition matricielle présente un type de branchement avec excitation par ligne ou par colonne.

5. Appareil selon la revendication 4, caractérisé par le fait que les éléments de la disposition matricielle peuvent être découplés par une technique de branchement d'une combinaison de bobines émettrices (4c') avec des bobines réceptrices (4c"), ou de bobines branchées à des diodes (4c'''), ou de bobines réceptrices (4c") avec des bobines émettrices branchées à des diodes (4c''''), ou de bobines émettrices (4c') avec des capteurs à effet Hall (4c''''') ou encore des bobines émettrices (4c') avec des diodes magnétiques (4c'''''').
